# EUROPÄISCHE PATENTSCHRIFT

(11) **EP 3 137 328 B1**
(45) Veröffentlichungstag und Bekanntmachung des Hinweises auf die Patenterteilung: **03.07.2019**
(21) Anmeldenummer: 15719671.8
(22) Anmeldetag: 27.04.2015
(51) Int. Cl.: B60K 1/02, B60K 6/547, B62M 7/02, B60L 15/20, F16H 1/22

(54) **ELEKTRISCHE ANTRIEBSEINHEIT FÜR EIN FAHRZEUG**
ELECTRICAL DRIVE UNIT FOR A VEHICLE
UNITÉ D'ENTRAÎNEMENT ÉLECTRIQUE POUR VÉHICULE

(30) Priorität: 28.04.2014 DE 102014207887
(43) Veröffentlichungstag der Anmeldung: 08.03.2017
(73) Patentinhaber: Bayerische Motoren Werke Aktiengesellschaft, 80809 München (DE)
(72) Erfinder: BOCK, Thomas, 82041 Oberhaching (DE); RÖSNER, Mathias, 80335 München (DE); GAUBATZ, Karl-Heinz, 85599 Parsdorf (DE); SCHMIDT, Ralf, 82054 Sauerlach (DE)
(86) Internationale Anmeldenummer: PCT/EP2015/059063
(87) Internationale Veröffentlichungsnummer: WO 2015/165844

(56) Entgegenhaltungen:
- EP-A2- 2 116 412
- DE-A1- 19 739 906
- JP-A- H04 143 123

## Beschreibung

Die Erfindung betrifft eine elektrische Antriebseinheit für ein Fahrzeug.

Die erfindungsgemäße elektrische Antriebseinheit soll für beliebige Fahrzeuge einsetzbar sein, also für Fahrzeuge zu Land, zu Wasser und in der Luft, bevorzugt soll sie jedoch bei Landfahrzeugen zum Einsatz kommen. Demzufolge beziehen sich die nachfolgenden Ausführungen schwerpunktmäßig auf Landfahrzeuge. Dies soll jedoch keine einschränkende Wirkung haben. In entsprechender Weise sind diese Ausführungen beispielsweise auch, auf Wasserfahrzeuge übertragbar.

Elektrische Antriebseinheiten können sowohl in einem Hybridfahrzeug als auch in einem Elektrofahrzeug zum Einsatz kommen. Hybrid- oder Elektrofahrzeuge weisen zumindest eine elektrische Maschine als Antriebsmaschine auf, wobei diese aus einer Traktionsbatterie mit elektrischer Energie versorgt wird. Bei einem Hybridfahrzeug wird neben der zumindest einen elektrischen Maschine ein weiteres Aggregat für den Antrieb eingesetzt, in der Regel ein Verbrennungsmotor. Wohingegen ein Elektrofahrzeug ausschließlich durch zumindest eine elektrische Maschine angetrieben wird. Die zum Einsatz kommenden elektrischen Maschinen sind in der Regel als Innenläufermaschinen ausgelegt, bei denen ein drehbar gelagerter Rotor von einem ortsfesten Stator umschlossen ist. Als Antriebsmaschinen können beispielsweise Synchronmaschinen, insbesondere Hybrid-Synchronmaschinen zum Einsatz kommen.

Die nachfolgenden Ausführungen beziehen sich auf Elektrofahrzeuge, was jedoch keine einschränkende Wirkung haben soll. In entsprechender Weise sind diese Ausführungen auch auf Hybridfahrzeuge übertragbar.

In der Regel werden für den Antrieb eines Elektrofahrzeugs eine einzelne elektrische Maschine und ein entsprechend den Anforderungen ausgelegtes Getriebe bzw. Getriebesystem eingesetzt. Um eine geforderte bzw. notwendige Gesamtantriebsübersetzung zu erreichen, können verschiedene Übersetzungsstufen zum Einsatz kommen, beispielsweise ein Vorgelegegetriebe, ein Schaltgetriebe, Sekundärtriebe, stufenlose Getriebe (sogenannte CVT Getriebe), Nachgelegegetriebe, Achsantriebsgetriebe, etc. Die vorgenannten Getriebe können entweder manuell oder automatisiert schaltbar ausgelegt sein. Auch kommen Bauvarianten zum Einsatz, bei denen für eine spezielle Antriebslösung die elektrische Maschine über eine koaxiale Eingangswelle direkt mit dem Getriebe verbunden ist, Ferner kann eine Kraftübertagung von der elektrischen Maschine zum Getriebe über einen Riemen, einen Kettentrieb oder über Stirnräder erfolgen.

Zur Erreichung höherer Abtriebsdrehmomente bzw. Abtriebsleistungen kann vorgesehen sein, mehrere elektrische Maschinen miteinander zu koppeln und die von den elektrischen Maschinen jeweils bereitgestellte Kraft bzw. das jeweils bereitgestellte Drehmoment in ein gemeinsames Getriebe einzuleiten. Diese Koppelung kann mittels Riemen- oder Kettentriebe erfolgen. Solch eine Koppelung hat jedoch folgende Nachteile: Zum einen erfordert sie sehr viel Bauraum. Aus diesem Grund können elektrische Antriebseinheiten mit bereits zwei (oder auch mehr) elektrischen Maschinen nur noch schwer bis gar nicht bei Motorrädern oder Scootern eingesetzt werden, da bei diesen beiden Fahrzeugarten nur ein begrenzter Bauraum zur Verfügung steht. Auch bei vor allem kleineren Personenkraftwagen oder auch bei bei Wasserfahrzeugen zum Einsatz kommenden Außenbordmotoren kann es zu dem vorbeschriebenen Bauraumproblem kommen. Zum anderen ist diese Art der Koppelung mit Blick auf den Wirkungsgrad nicht optimal. Aufgrund der zahlreichen an der Kraftübertragung beteiligten Elemente kommt es insgesamt zu erhöhten Reibungsverlusten und somit zu erhöhten Wärmeeinträgen in das Antriebssystem bzw. in die Antriebseinheit.

Selbst bisher bekannte Baukastenansätze, mit denen es möglich ist, ein Fahrzeug variabel, d.h. den jeweiligen Anforderungen entsprechend, mit einem Antrieb bzw. Motor unterschiedlicher Leistung auszustatten, indem hierfür identische elektrische Maschinen miteinander gekoppelt werden (Stichwort "Schwarmmotorisierung" bzw. "Mengenskalierung"), sind noch nicht optimal. Der Grund ist, dass bei diesen Ansätzen für jedes zu applizierende Fahrzeug ein entsprechendes, d.h. individuell angepasstes Koppelungsgetriebe mit zugehörigem Gehäuse entwickelt bzw. appliziert werden muss.

Aus der gattungsgemässen JP H04-143123 A ist eine elektrische Antriebseinheit bekannt für ein Fahrzeug, mit einer Aufnahmeeinheit, einer Anzahl von elektrischer Maschinen, wobei jede dieser elektrischen Maschinen eine Maschinenabtriebswelle zum Bereitstellen eines Maschinendrehmoments aufweist, und wobei jede dieser elektrischen Maschinen mit der Aufnahmeeinheit verbunden ist, einer gemeinsamen Hauptwelle, über die die Antriebseinheit abtriebsseitig ein Antriebseinheitendrehmoment bereitstellen kann, und einem Koppelelement, über das die Maschinenabtriebswellen antriebsseitig mit der Hauptwelle zum Einspeisen der Maschinendrehmomente wirkverbunden sind.

Es ist daher eine Aufgabe der vorliegenden Erfindung, eine kompakte elektrische Antriebseinheit für ein Fahrzeug bereitzustellen, die einfach und kostengünstig aufgebaut ist, die aber dennoch zuverlässig arbeitet, und die gleichzeitig in einfacher Art und Weise an die unterschiedlichen Drehmoment- bzw. Leistungsanforderungen von unterschiedlichen Fahrzeugen bzw. Fahrzeugklassen angepasst werden kann, und die sich zudem durch sehr geringe Wirkungsgradverluste auszeichnet.

Diese Aufgabe wird durch eine elektrische Antriebseinheit für ein Fahrzeug gemäss dem Anspruch 1 gelöst, die folgende Mittel aufweist: eine Aufnahmeeinheit, wobei die Aufnahmeeinheit eine Maximalanzahl von Aufnahmebereichen aufweist, von denen jeder dazu ausgebildet ist, eine elektrische Maschine aufzunehmen, eine Anzahl von elektrischen Maschinen, wobei jede dieser elektrischen Maschinen eine Maschinenabtriebswelle zum Bereitstellen eines Maschinendrehmoments aufweist, und wobei jede dieser elektrischen Maschinen in einen ihr zugeordneten Aufnahmebereich eingebracht ist und mit der Aufnahmeeinheit verbunden ist, eine gemeinsame Hauptwelle, über die die Antriebseinheit abtriebsseitig ein Antriebseinheitendrehmoment bereitstellen kann, und ein Koppelelement, über das die Maschinenabtriebswellen antriebsseitig mit der Hauptwelle zum Einspeisen der Maschinendrehmomente wirkverbunden sind, wobei die eingebrachten elektrischen Maschinen baulich eigenständig ausgebildet sind und jeweils über eine individuell zugeordnete Ansteuervorrichtung verfügen, sodass die Antriebseinheit skalierbar ist, indem die Anzahl der eingebrachten elektrischen Maschinen vorbestimmbar ist, und zwar in Abhängigkeit eines Vorgabewerts, der im Vorfeld für eine abtriebsseitige Kenngröße der aufzubauenden Antriebseinheit vorgebbar ist, wobei die Anzahl der eingebrachten elektrischen Maschinen zwischen 1 und der Maximalanzahl liegt.

Der erfindungsgemäßen elektrischen Antriebseinheit liegt folgende Grundidee zugrunde: die erfindungsgemäße Antriebseinheit weist eine Aufnahmeeinheit auf, in die eine Anzahl baulich eigenständig ausgebildeter elektrischer Maschinen eingebracht werden kann. Die Anzahl der einzubringenden bzw. dann letztlich in die Aufnahmeeinheit eingebrachten elektrischen Maschinen ist für die jeweils aufzubauende elektrische Antriebseinheit vorbestimmt, und zwar in Abhängigkeit eines Vorgabewerts, der im Vorfeld, d.h. bei der Projektierung, für eine abtriebsseitige Kenngröße der für ein konkretes Fahrzeug bzw. für eine konkrete Fahrzeugklasse aufzubauenden Antriebseinheit vorgegeben ist. Diese Anzahl kann zwischen 1, die elektrische Antriebseinheit stellt in diesem Fall das kleinste Antriebseinheitendrehmoment bereit, und einer durch die Ausgestaltung der Aufnahmeeinheit vorgegebenen Maximalanzahl liegen, in diesem Fall stellt die elektrische Antriebseinheit das größte Antriebseinheitendrehmoment bereit. Die erfindungsgemäße Antriebseinheit verfügt über eine Hauptwelle und über ein Koppelelement, über das die Maschinenabtriebswellen der einzelnen elektrischen Maschinen mit der Hauptwelle zum Einspeisen des von den elektrischen Maschinen jeweils bereitgestellten Maschinendrehmoments wirkverbunden sind. Über die Hauptwelle stellt die Antriebseinheit abtriebsseitig ein Antriebseinheitendrehmoment bereit, das durch Überlagerung der von den einzelnen elektrischen Maschinen jeweils bereitgestellten Maschinendrehmomente hervorgeht. Bei der erfindungsgemäßen Antriebseinheit werden die von den einzelnen elektrischen Maschinen bereitgestellten Maschinendrehmomente eingangsseitig überlagert.

Mit der erfindungsgemäßen elektrischen Antriebseinheit ist es somit möglich, auf einfache Art und Weise für ein bestimmtes Fahrzeug bzw. für eine bestimmte Fahrzeugklasse eine Antriebseinheit bereitzustellen, die an die Drehmoment- bzw. Leistungsanforderungen des jeweiligen Fahrzeugs bzw. der jeweiligen Fahrzeugklasse angepasst ist. Diese einfache Anpassung bzw. Adaption wird dadurch erreicht, dass in die Aufnahmeeinheit eine zwischen 1 und der Maximalanzahl liegende Anzahl von elektrischen Maschinen eingebracht werden kann. D.h. es kann eine Anzahl von elektrischen Maschinen eingebracht werden, die sich daran orientiert bzw. dadurch vorgegeben ist, welches Drehmoment bzw. welche Leistung die elektrische Antriebseinheit letztlich abtriebsseitig maximal bereitzustellen hat. Mit anderen Worten: bei der erfindungsgemäßen Antriebseinheit handelt es sich um eine skalierbare Antriebseinheit, bei der sich das abtriebsseitig maximal bereitstellbare Drehmoment bzw. die abtriebsseitig maximal bereitstellbare Leistung in Schritten einrichten lässt, wobei diese Schritte durch die einzelnen verwendeten elektrischen Maschinen vorgegeben sind.

Dadurch dass die Maschinendrehmomente über ein gemeinsames Koppelelement auf die Hauptwelle eingespeist werden, wird ein kompakter, einfacher und zudem zuverlässig arbeitender Aufbau der elektrischen Antriebseinheit erreicht. Aufgrund der geringen Anzahl von an der Einspeisung beteiligten Einzelkomponenten ergeben sich zudem sehr geringe Wirkungsgradverluste. Diese Art der Einspeisung zeichnet sich außerdem dadurch aus, dass die aus der Maschinenabtriebswelle und dem Koppelelement gebildete Paarung lediglich bezüglich des Maschinendrehmoments auszulegen ist, das von der einzelnen elektrischen Maschine bereitgestellt wird. Lediglich die Hauptwelle ist in ihrer Größe und Lagerung hinsichtlich des sich durch Überlagerung der einzelnen Maschinendrehmomente ergebenden, insbesondere maximal möglichen Antriebseinheitendrehmoments, das von der Antriebseinheit abtriebsseitig über die Hauptwelle bereit gestellt wird, auszulegen. Dies trägt zum kostengünstigen Aufbau der erfindungsgemäßen Antriebseinheit bei.

Die obengenannte Aufgabe ist daher vollständig gelöst.

Vorzugsweise werden baugleiche elektrische Maschinen verwendet, d.h. es ist vorgesehen, in die Aufnahmeeinheit eine Anzahl von baugleichen elektrischen Maschinen einzubringen. Durch die Bereitstellung einer elektrischen Standardmaschine lässt sich eine besonders kostengünstige elektrische Antriebseinheit aufbauen, da die Antriebseinheit in diesem Fall aus sehr vielen, in der Beschaffung demzufolge kostengünstigen Gleichteilen besteht. Die Verwendung einer sogenannten Standardmaschine hat ferner den Vorteil, dass sich das von der Antriebseinheit abtriebsseitig bereitgestellte Antriebseinheitendrehmoment in vorgegebenen Stufen vorgeben lässt, wobei die Stufe durch das Maschinendrehmoment (Nenndrehmoment) der Standardmaschine vorgegeben ist. Mit anderen Worten: entsprechend des Maschinendrehmoments der Standardmaschine lässt sich das Antriebseinheitendrehmoment staffeln. Entsprechend dem von der Antriebseinheit bereitzustellen maximalen Antriebseinheitendrehmoment werden in der Antriebseinheit eine daraus abgeleitete Anzahl von Standardmaschinen eingebracht.

In einer weiteren Ausgestaltung der Erfindung ist die Aufnahmeeinheit derart ausgebildet, dass die eingebrachten elektrischen Maschinen derart angeordnet sind, dass die Maschinenabtriebswellen parallel zueinander ausgerichtet sind. Durch diese Maßnahme lässt sich eine besonders kompakt bauende elektrische Antriebseinheit realisieren.

In einer weiteren Ausgestaltung der Erfindung ist die Aufnahmeeinheit derart ausgebildet, dass die eingebrachten elektrischen Maschinen derart angeordnet sind, dass die Maschinenabtriebswellen symmetrisch in Bezug auf die Hauptwelle angeordnet sind. Diese Maßnahme ermöglicht zum einen ein besonders gutes Einleiten bzw. Einspeisen der Maschinendrehmomente auf die Hauptwelle und zum anderen einen überaus kompakten Aufbau der Antriebseinheit.

In einer weiteren bevorzugten Ausgestaltung der Erfindung ist die Aufnahmeeinheit derart ausgebildet, dass die eingebrachten elektrischen Maschinen derart angeordnet sind, dass die Maschinenabtriebswellen parallel zu der Hauptwelle ausgerichtet sind. Auch diese Maßnahme ermöglicht einen besonders kompakten Aufbau der elektrischen Antriebseinheit.

Vorzugsweise sind die elektrischen Maschinen symmetrisch zu einer Mittelachse angeordnet, wobei diese Mittelachse der Drehachse der Hauptwelle entspricht. Besonders bevorzugt sind die elektrischen Maschinen so angeordnet, dass sich die einzelnen Maschinenabtriebswellen auf einer kreisförmig ausgebildeten Linie befinden, wobei die Hauptwelle durch den Mittelpunkt dieser Linie verläuft und die Maschinenabtriebswellen dabei parallel zu der Hauptwelle ausgerichtet sind. Mit anderen Worten: bei der besonders bevorzugten Anordnung sind die elektrischen Maschinen derart angeordnet, dass die parallel zur Hauptwelle ausgerichteten Maschinenabtriebswellen konzentrisch zu der Hauptwelle angeordnet sind. Eine elektrische Antriebseinheit mit derart angeordneten elektrischen Maschinen weist einen minimalen Bauraum auf. Vorzugsweise handelt es sich bei dem Fahrzeug, in dem eine derart ausgebildete Antriebseinheit zum Einsatz kommt, um ein einspuriges Fahrzeug, also beispielsweise um ein Motorrad oder um einen Scooter. Wie bereits eingangs ausgeführt, ist der bei diesen beiden Fahrzeugarten zur Verfügung stehende Bauraum sehr begrenzt, weswegen eine elektrische Antriebseinheit besonders kompakt aufgebaut sein muss. Alternativ kann eine derart ausgebildete elektrische Antriebseinheit auch bei kleineren Personenkraftwagen oder auch bei Außenbordmotoren für Wasserfahrzeuge zum Einsatz kommen.

In einer bevorzugten Ausgestaltung der Erfindung handelt es sich bei dem Koppelelement um ein mit der Hauptwelle in Wirkverbindung stehendes Zahnrad. Konsequenterweise weisen bei einem derart ausgebildeten Koppelelement die Maschinenabtriebswellen zumindest einen Zahnradbereich auf, über den sie jeweils mit dem Zahnrad wirkverbunden sind. Bei dem Zahnradbereich kann es sich um ein auf der Maschinenabtriebswelle angebrachtes, d.h. mit ihr verbundenes baulich eigeständig ausgeführtes Zahnrad handeln. Es ist aber auch denkbar, dass der Zahnradbereich mittels spanender Verfahren in die Maschinenabtriebswelle eingearbeitet ist. Ein als Zahnrad ausgebildetes Koppelelement ist zum einen kostengünstig in seiner Herstellung und ermöglicht zum anderen zusammen mit entsprechend ausgebildeten Maschinenabtriebswellen ein besonders zuverlässiges Einspeisen der Maschinendrehmomente in die Hauptwelle und somit den Aufbau einer zuverlässig arbeitenden Antriebseinheit. Die einzelnen eingebrachten elektrischen Maschinen treiben somit über ihre jeweilige Maschinenabtriebswelle ein auf der Hauptwelle gelagertes Zahnrad an. Die bei dieser Ausgestaltung gegebene Zahnradpaarung ist lediglich mit Blick auf das von der jeweiligen elektrischen Maschine in die Hauptwelle einzuspeisende Maschinendrehmoment auszulegen.

Wenn wie weiter oben ausgeführt, die elektrischen Maschinen vorzugsweise derart symmetrisch zu einer Mittelachse angeordnet sind, dass diese Mittelachse der Drehachse der Hauptwelle entspricht und sich die einzelnen Maschinenabtriebswellen auf einer kreisförmig ausgebildeten Linie befinden, durch deren Mittelpunkt die Hauptwelle verläuft und die Maschinenabtriebswellen dabei parallel zu der Hauptwelle ausgerichtet sind, so entspricht die gesamte Anordnung, die aus dem als Zahnrad ausgebildeten Koppelelement und den jeweils einen Zahnradbereich aufweisenden Maschinenabtriebswellen besteht, der eines Planetenradgetriebes, das jedoch kein Hohlrad aufweist. Von der räumlichen Anordnung her entsprechen die Zahnradbereiche den Planeten und das als Zahnrad ausgebildete Koppelelement dem gemeinsamen Sonnenrad. Die so realisierte Zahnradpaarung entspricht einer Übersetzungsstufe eines Getriebes. Die Maschinenabtriebswellen sind konzentrisch zu der Hauptwelle angeordnet.

Wie bereits oben ausgeführt, ist das von der Antriebseinheit maximal bereitstellbare Antriebseinheitendrehmoment durch die Anzahl der in die Aufnahmeeinheit eingebrachten elektrischen Maschinen bestimmt, wobei dieses auf denjenigen Wert gedeckelt ist, der sich dann ergibt, wenn die Maximalanzahl von elektrischen Maschinen in die Aufnahmeeinheit eingebracht ist. Demzufolge ist es möglich, diejenigen Komponenten, aus denen das vorstehend beschriebene Getriebe aufgebaut ist, und somit das Getriebe auf dasjenige Antriebseinheitendrehmoment auszulegen, das sich bei der Maximalanzahl von eingebrachten elektrischen Maschinen einstellt. Somit kann für die unterschiedlichen Fahrzeuge bzw. Fahrzeugklassen, bei denen die erfindungsgemäße elektrische Antriebseinheit zum Einsatz kommen soll, ein einheitlich dimensioniertes Getriebe verwendet werden. Neben der Verwendung von baugleichen elektrischen Maschinen führt auch dies zu einem verstärkten Einsatz von Gleichteilen, was ebenfalls zu einem kostengünstigen Aufbau der erfindungsgemäßen Antriebseinheit beiträgt.

Vorteilhafterweise steht das Koppelelement über eine Freilaufvorrichtung mit der Hauptwelle in Wirkverbindung. Vorzugsweise ist dies dann der Fall, wenn die Hauptwelle Teil eines mehrstufig ausgeführten Getriebes ist. Besonders bevorzugt soll es sich um ein zweistufig ausgeführtes Getriebe handeln. Bei der Freilaufvorrichtung kann es sich im einfachsten Fall um einen mechanisch realisierten Freilauf handeln, der beispielsweise in Form eines Klemmrollen-Freilaufs oder eines Klemmkörper-Freilaufs realisiert ist. Bei dieser Ausgestaltung wird die erste Getriebestufe bei zunehmender Drehzahl der Hauptwelle ab einer bestimmten, d.h. vorgegebenen Drehzahl überholt. Es kann sich aber auch um einen angesteuerten Aktuator handeln, was insbesondere dann von Vorteil ist, wenn für die elektrische Antriebseinheit auch ein sogenannter Rekuperationsbterieb möglich sein soll. Der Aktuator kann in Form einer Kupplung ausgeführt sein, durch die bei entsprechend großer Drehzahl der Hauptwelle die erste Getriebstufe von der Hauptwelle entkoppelt werden kann. D.h. die Kupplung ist so ausgebildet, dass ab einer bestimmten Drehzahl der Huaptwelle der Kraftschluss zwischen dem Koppelelement und der Hauptwelle aufgehoben wird. Die Ansteuerung des Aktuatores kann dabei elektrisch oder hydraulisch erfolgen.

Vorzugsweise sollen zum Ausbilden einer ersten Stufe eines solchen Getriebes die Zahnradbereiche der Maschinenabtriebswellen und das als Zahnrad ausgebildete Koppelelement zusammenwirken. Zum Ausbilden einer weiteren, insbesondere zweiten Stufe des Getriebes, weisen die Maschinenabtriebswellen jeweils einen weiteren Zahnradbereich auf, wobei die weiteren Zahnradbereiche mit einem weiteren, mit der Hauptwelle in Wirkverbindung stehenden Zahnrad zusammenwirken. Diese für das Getriebe gewählte Bauform hat den Vorteil, dass sich in einfacher Art und Weise ein kompakt bauendes Getriebe mit einer sehr großen Anzahl n von Getriebestufen realisieren lässt, welche vorzugsweise schaltbar ausgeführt werden können, beispielsweise in Abhängigkeit der Drehzahl der Hauptwelle.

Der mehrstufige Aufbau des Getriebes kann wie folgt realisiert sein: im Fall eines n-stufigen Getriebes weisen die Maschinenabtriebswellen n hintereinander angeordnete Zahnradbereiche auf, die vorzugsweise jeweils eine unterschiedliche Zähnezahl aufweisen. Die hintereinander angeordneten Zahnradbereiche können beispielsweise dadurch realisiert sein, dass auf den Maschinenabtriebswellen jeweils n Zahnräder (Ebenen 1 bis n) angeordnet sind. Diese Zahnräder stehen mit entsprechend auf der Hauptwelle angeordneten n Zahnrädern (ebenfalls Ebenen 1 bis n), den sogenannten Sonnenrädern, jeweils in Wirkverbindung bzw. im Eingriff. Durch eine vorzugsweise drehzahlabhängige Steuerung des Kraftschlusses zwischen den einzelnen, auf der Hauptwelle angeordneten Zahnrädern und der Hauptwelle, kann das Schalten des Getriebes in die unterschiedlichen Gänge erfolgen. Um unterschiedliche Übersetzungen für die einzelnen Paarungen, bestehend aus den einander jeweils zugeordneten Zahnradbereichen einerseits und dem Sonnenrad andererseits, realisieren zu können, müssen die Paarungen untereinander unterschiedliche Zähnezahlverhältnisse aufweisen, d.h. beispielweise die Paarung der Ebene 1 weist ein Zähnezahlverhältnis z₁ und die Paarung der Ebene n-2 weist ein Zähnezahlverhältnis zₙ₋₂ auf, wobei sich z₁ und zₙ₋₂ unterscheiden, wobei diese Betrachtung für sämtliche denkbare paarweisen Paarungskombinationen gelten soll.

Um ein mehrstufig ausgeführtes bzw. schaltbares Getriebe realisieren zu können, ist es in einer vorteilhaften Ausgestaltung der Erfindung vorgesehen, dass das weitere Zahnrad über eine Kupplungsvorrichtung mit der Hauptwelle in Wirkverbindung steht. Vorteilhafterweise ist die Kupplungsvorrichtung hierfür dazu ausgebildet, einen Kraftschluss zwischen dem weiteren Zahnrad und der Hauptwelle zu ermöglichen. Somit ist es möglich bei Vorliegen eines vorgegebenen Kriteriums, beispielsweise bei Erreichen einer vordefinierten Drehzahl der Hauptwelle, das weitere Zahnrad mit der Hauptwelle in Eingriff zu bringen, was dazu führt, dass eine andere Gangstufe gewählt ist. Bei der Kupplungsvorrichtung kann es sich um eine rein mechanisch arbeitende Kupplung handeln, bei der der erforderliche Kraftschluss dadurch hergestellt wird, dass bewegliche Elemente aufgrund einer sich einstellenden Fliehkraft bewegt bzw. verschoben werden. Als Beispiel sei hier eine Fliehkraftkupplung genannt. Es kann sich aber auch um elektromagnetisch oder hydraulisch aufgebaute Aktuatoren handeln, die über entsprechende Ansteuersignale zum Ausbilden des Kraftschlusses angesteuert werden. Der Einsatz derart ansteuerbarer Kupplungsvorrichtungen bietet sich beispielsweise dann an, wenn beabsichtigt ist, ein Fahrzeug, das mit einer erfindungsgemäßen Antriebseinheit ausgestattet ist, auch im Rekuperationsbetrieb zu betreiben. Alternativ kann die Kupplungsvorrichtung auch handbetätigbar ausgeführt sein.

In einer weiteren Ausgestaltung der Erfindung weist die Aufnahmeeinheit Kühlrippen auf. Diese Maßnahme hat den Vorteil, dass auf einfache Art und Weise eine zuverlässige Kühlung der elektrischen Antriebseinheit möglich ist. Es kann auf eine aufwändige Wasserkühlung verzichtet werden. Diese Maßnahme ermöglicht den kostengünstigen Aufbau einer zuverlässig arbeitenden Antriebseinheit. Alternativ oder ergänzend können weitere Komponenten der Antriebseinheit ebenfalls mit Kühlrippen versehen sein.

Die erfindungsgemäße Antriebseinheit eignet sich aufgrund ihres sehr kompakten Aufbaus besonders gut für den Einsatz bei Motorrädern oder Scootern. Die bei der erfindungsgemäßen Antriebseinheit gegebene bauliche Vereinigung der elektrischen Maschinen einerseits und des Getriebes andererseits zu einer kompakten Antriebseinheit ermöglicht bei einem Scooter eine triebsatzschwingenfeste Montage, wohingegen bei einem Motorrad eine rahmenfeste Montage erfolgt. Die Anordnung der erfindungsgemäßen Antriebseinheit als Triebsatz (Scooter) oder als rahmenfeste Komponente (Motorrad) bewirkt für die erfindungsgemäße Antriebseinheit einen verbesserten Wärmehaushalt.

In einer weiteren Ausgestaltung der Erfindung verfügen die eingebrachten elektrischen Maschinen jeweils über eine individuell zugeordnete Ansteuervorrichtung. Diese Maßnahme ermöglicht ein gleichmäßiges Einspeisen der von den einzelnen elektrischen Maschinen bereitgestellten Maschinendrehmomente, da es möglich ist, beispielsweise komponentenspezifische Toleranzen auszugleichen. In diesem Zusammenhang kann es vorgesehen sein, dass einer dieser Ansteuervorrichtungen die Funktion des Masters zugewiesen ist, während die übrigen Ansteuervorrichtungen jeweils die Funktion eines Slaves innehaben. Alternativ kann vorgesehen sein, dass die Funktion des Masters nicht von einer der Ansteuervorrichtungen selbst wahrgenommen wird, sondern hierfür eine übergeordnete zentrale Steuereinheit vorgesehen ist.

Wie bereits oben stehend ausgeführt, stellt die Antriebseinheit über die Hauptwelle abtriebsseitig ein Antriebseinheitendrehmoment bereit, das durch Überlagerung der von den einzelnen elektrischen Maschinen jeweils bereitgestellten Maschinendrehmomente hervorgeht. Insofern kann die erfindungsgemäße Antriebseinheit als eine Antriebseinheit aufgefasst werden, die ein Getriebe hat, das die Funktionalität eines "Summiergetriebes" aufweist.

Ausführungsbeispiele der Erfindung sind in der Zeichnung dargestellt und werden in der nachfolgenden Beschreibung näher erläutert. Es zeigen:
- Fig. 1: anhand einer schematischen Darstellung den Aufbau der erfindungsgemäßen elektrischen Antriebseinheit,
- Fig. 2: anhand einer weiteren schematischen Darstellung die erfindungsgemäße Antriebseinheit, wobei die in der Antriebseinheit verbauten elektrischen Maschinen gesondert dargestellt sind,
- Fig. 3: anhand einer weiteren schematischen Darstellung, bei der der Getriebeteildeckel entfernt ist, den Aufbau des getriebeseitigen Teils,
- Fig. 4: anhand einer Explosionszeichnung den Aufbau der erfindungsgemäßen Antriebseinheit,
- Fig. 5: anhand einer schematischen Detailansicht den eine erste Getriebestufe bildenden Teil des in der erfindungsgemäßen Antriebseinheit enthaltenen Getriebes, und
- Fig. 6: anhand einer schematischen Detailansicht den eine zweite Getriebestufe bildenden Teil des in der erfindungsgemäßen Antriebseinheit enthaltenen Getriebes.

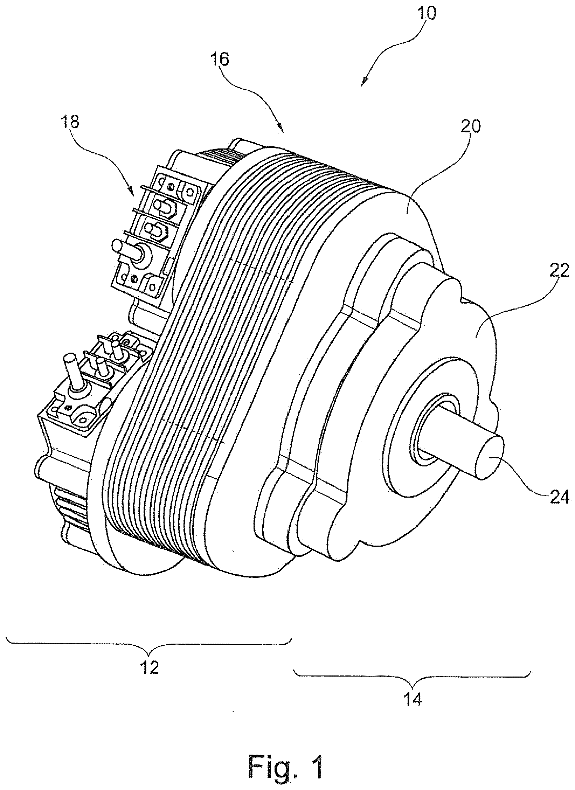

Fig. 1 zeigt eine gemäß der Erfindung ausgeführte elektrische Antriebseinheit 10. Die Antriebseinheit 10 ist in einen maschinenseitigen Teil 12 und einen getriebeseitigen Teil 14 unterteilt bzw. gegliedert. Der motorseitige Teil 12 umfasst eine Aufnahmeeinheit 16, in die eine Anzahl von elektrischen Maschinen eingebracht ist, von denen eine mit dem Bezugszeichen 18 gekennzeichnet ist. Der motorseitige Teil 12 ist mit einem Motorteildeckel 20 abgeschlossen. Der getriebeseitige Teil 14 setzt auf dem Motorteildeckel 20 auf. Der getriebeseitige Teil 14 ist mit einem Getriebeteildeckel 22 verschlossen. Der getriebeseitige Teil 14 weist eine aus diesem teilumfänglich herausragende Hauptwelle 24 auf, über die die elektrische Antriebseinheit 10 abtriebsseitig ein Antriebseinheitendrehmoment bereitstellen kann. Das Antriebseinheitendrehmoment wird über eine in Fig. 1 nicht dargestellte Übertragungsvorrichtung an ebenfalls nicht dargestellte Antriebsräder eines Fahrzeugs übertragen. Handelt es sich bei dem Fahrzeug beispielsweise um einen Scooter oder um ein Motorrad, so kann es sich bei der Übertragungsvorrichtung um eine Kette oder um einen Riemen handeln.

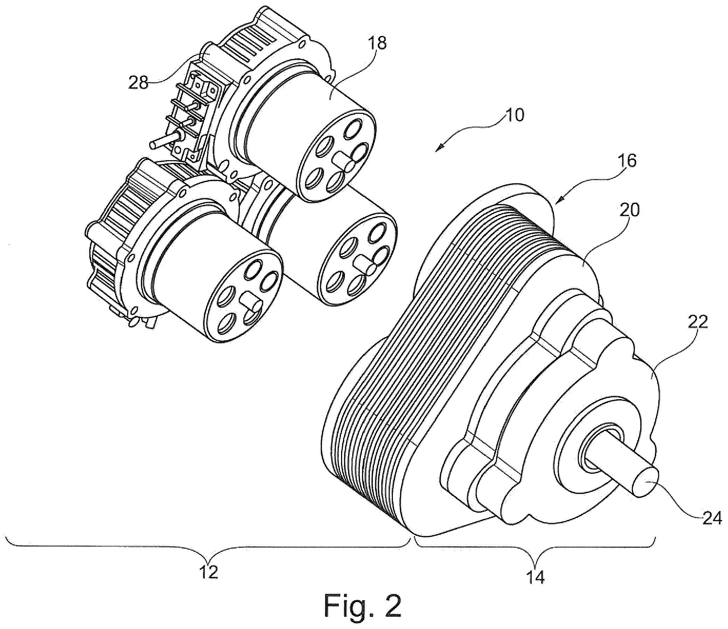

Fig. 2 zeigt in einer weiteren schematischen Darstellung erneut die erfindungsgemäße Antriebseinheit 10, wobei im Vergleich zu Fig. 1 die in der Antriebseinheit 10 verbauten elektrischen Maschinen gesondert dargestellt sind. Eine dieser elektrischen Maschinen ist exemplarisch mit dem Bezugszeichen 18 gekennzeichnet.

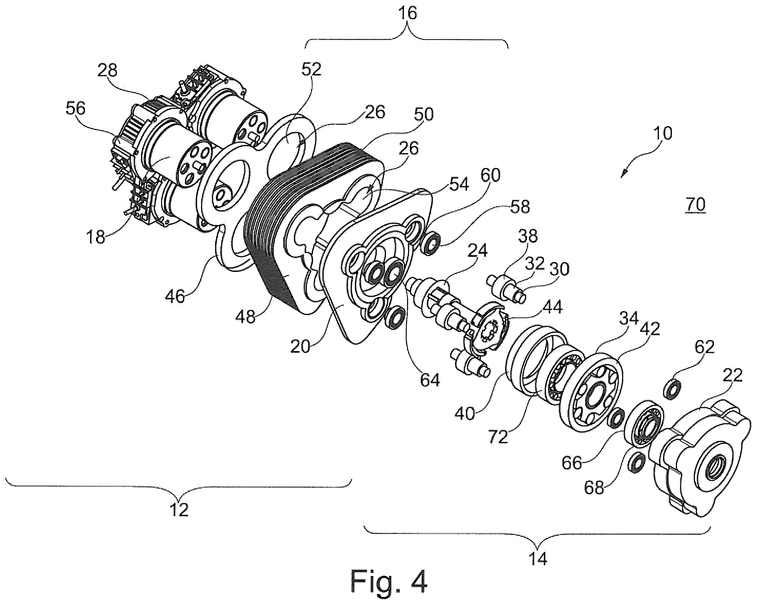

Wie der Darstellung in Fig. 2 zu entnehmen ist, ist die Aufnahmeeinheit 16 dazu ausgebildet, eine Anzahl von baulich eigenständig ausgebildeten elektrischen Maschinen 18 aufzunehmen. Hierzu weist die Aufnahmeeinheit 16 eine noch im Zusammenhang mit Fig. 4 zu beschreibende Maximalanzahl von Aufnahmebereichen 26 auf, wobei jeder dieser Aufnahmebereiche 26 dazu ausgebildet ist, eine der elektrischen Maschinen 18 aufzunehmen.

Die in den Figuren dargestellte Antriebseinheit ist dazu ausgebildet, maximal drei elektrische Maschinen aufzunehmen. Dies soll keine einschränkende Wirkung haben. Selbstverständlich kann die Antriebseinheit auch dazu ausgebildet sein, eine beliebige andere Maximalanzahl von elektrischen Maschinen aufzunehmen, unter entsprechender Anpassung des maschinenseitigen Teils 12 und des getriebeseitigen Teils 14.

Wie der Darstellung in Fig. 2 zu entnehmen ist, verfügen die in die Aufnahmeeinheit 16 einzubringenden bzw. dann eingebrachten elektrischen Maschinen 18 jeweils über eine individuell zugeordnete Ansteuervorrichtung 28, mit der die jeweilige elektrische Maschine 18 zu deren Betrieb angesteuert werden kann. Gemäß der Darstellung in Fig. 2 soll jeweils eine Ansteuervorrichtung 28 und eine elektrische Maschine 18 eine bauliche Einheit bilden. Dies soll keine einschränkende Wirkung haben. Es ist auch denkbar, dass die Ansteuervorrichtung 28 und die elektrische Maschine 18 räumlich voneinander getrennt angeordnet sind. Ferner ist es auch denkbar, eine einzige Ansteuervorrichtung vorzusehen, mit der sämtliche in der Antriebseinheit verbauten elektrischen Maschinen gleichermaßen angesteuert werden.

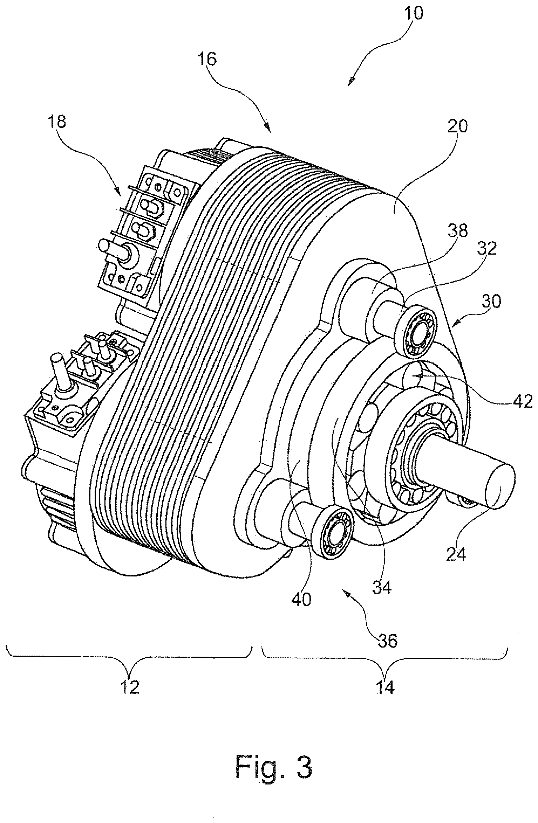

Fig. 3 zeigt die erfindungsgemäße Antriebseinheit 10 ohne den Getriebeteildeckel 22.

Wie der Darstellung in Fig. 3 zu entnehmen ist, weist jede der elektrischen Maschinen 18 eine Maschinenabtriebswelle zum Bereitstellen eines Maschinendrehmoments auf, wobei eine dieser Maschinenabtriebswellen exemplarisch mit dem Bezugszeichen 30 gekennzeichnet ist. Die Maschinenabtriebswellen 30 weisen einen Zahnradbereich 32 auf, über den die jeweilige Maschinenabtriebswelle 30 mit einem als Zahnrad ausgebildeten Koppelelement 34 wirkverbunden ist. Über das Koppelelement 34 ist die Maschinenabtriebswelle 30 antriebsseitig mit der Hauptwelle 24 zum Einspeisen eines Maschinendrehmoments wirkverbunden.

Der getriebeseitige Teil 14 soll ein zweistufig ausgebildetes Getriebe 36 umfassen, wobei zum Ausbilden einer ersten Stufe des zweistufigen Getriebes 36 die Zahnradbereiche 32 der Maschinenabtriebswellen 30 und das als Zahnrad ausgebildete Koppelelement 34 zusammenwirken. Zum Ausbilden einer weiteren, nämlich der zweiten Stufe des Getriebes 36 weisen die Maschinenabtriebswellen 30 jeweils einen weiteren Zahnradbereich 38 auf. Die weiteren Zahnradbereiche 38 wirken mit einem weiteren Zahnrad 40 zusammen, das mit der Hauptwelle 24 in Wirkverbindung steht.

Damit das zweistufige Getriebe 36 schaltbar ist, steht das Koppelelement 34 nicht direkt mit der Hauptwelle 24 in Wirkverbindung, sondern über eine Freilaufvorrichtung 42. Ferner ist das weitere Zahnrad 40 über eine in Fig. 3 nicht einsehbare Kupplungsvorrichtung 44 mit der Hauptwelle 24 wirkverbunden. Die Kupplungsvorrichtung 44 ist dazu ausgebildet, einen Kraftschluss zwischen dem weiteren Zahnrad 40 und der Hauptwelle 24 zu ermöglichen.

Die Arbeitsweise des zweistufigen Getriebes 36 ist dabei wie folgt: in der ersten Stufe treiben die elektrischen Maschinen 18 über das auf der Freilaufvorrichtung 42 angeordnete Koppelelement 34 die Hauptwelle 24 an, wobei sich hierbei die Freilaufvorrichtung 42 in ihrem sperrenden bzw. gesperrten Zustand befindet. Ab einer gewissen Drehzahl der Hauptwelle 24 kommt die Kupplungsvorrichtung 44, die vorzugsweise als mechanisch arbeitende Fliehkraftkupplung ausgebildet ist, in Eingriff. Über diese Kupplungsvorrichtung 44 ist das weitere Zahnrad 40 auf der Hauptwelle 24 gelagert. Dadurch dass die Kupplungsvorrichtung 44 der zweiten Stufe in Eingriff kommt, wird die Freilaufvorrichtung 42 der ersten Stufe überholt. Das Einspeisen der Maschinendrehmomente erfolgt somit nicht mehr über die erste Stufe (Paarung Zahnradbereich 32, Koppelelement 34) des Getriebes, sondern über die zweite Stufe (Paarung weiterer Zahnradbereich 38, weiteres Zahnrad 40). Es handelt sich somit um ein automatisiert, und zwar in Abhängigkeit der Drehzahl bzw. der Fliehkraft schaltendes zweistufiges Getriebe.

Sowohl das als Zahnrad ausgebildete Koppelelement 34 als auch das weitere Zahnrad 40 können aufgrund ihrer Anordnung bezüglich der Zahnradbereiche 32 bzw. der weiteren Zahnradbereiche 38 als Sonnenrad angesehen werden.

Die Darstellung in Fig. 3, gemäß der es sich um ein zweistufig ausgebildetes Getriebe handelt, soll keine einschränkende Wirkung haben. In allgemeiner Weise formuliert, kann die erfindungsgemäße Antriebseinheit ein mehrstufiges Getriebe mit n Stufen aufweisen. Handelt es sich um ein Getriebe mit mehr als den in Fig. 3 dargestellten zwei Stufen, so weisen die Maschinenabtriebswellen entsprechend mehr weitere Zahnradbereiche auf und auf der Hauptwelle 24 sind entsprechend mehr weitere Zahnräder über zugehörige Kupplungsvorrichtungen angeordnet, wobei sowohl die weiteren Zahnradbereiche als auch die weiteren Zahnräder jeweils hintereinander angeordnet sind. Die Kupplungsvorrichtungen sind dabei entweder so ausgelegt, dass sie trägheitsbedingt bei unterschiedlichen Drehzahlen der Hauptwelle 24 einen Kraftschluss zwischen dem jeweiligen weiteren Zahnrad und der Hauptwelle 24 ermöglichen, oder werden über eine entsprechend eingerichtete Ansteuereinheit derart angesteuert, dass über die aus den jeweils zugehörigen weiteren Zahnradbereichen und weiteren Zahnrädern gebildeten Getriebestufen bei unterschiedlichen Drehzahlen das Einspeisen der Maschinendrehmomente in die Hauptwelle 24 erfolgt.

Wie der Darstellung in Fig. 3 zu entnehmen ist, ist die Aufnahmeeinheit 16 derart ausgebildet, dass die eingebrachten elektrischen Maschinen 18 derart angeordnet sind, dass die Maschinenabtriebswellen 30 parallel zueinander ausgerichtet sind. Zudem sind die eingebrachten elektrischen Maschinen 18 derart angeordnet, dass die Maschinenabtriebswellen 30 symmetrisch in Bezug auf die Hauptwelle 24 angeordnet sind. Dabei sind die Maschinenabtriebswellen 30 parallel zu der Hauptwelle 24 ausgerichtet. Die elektrischen Maschinen sind symmetrisch zu einer Mittelachse angeordnet, wobei diese Mittelachse der Drehachse der Hauptwelle entspricht. Die einzelnen Maschinenabtriebswellen befinden sich dabei auf einer im Wesentlichen kreisförmig ausgebildeten Linie, durch deren Mitelpunkt die Hauptwelle verläuft. D.h. die elektrischen Maschinen sind derart angeordnet, dass die parallel zur Hauptwelle ausgerichteten Maschinenabtriebswellen konzentrisch zu der Hauptwelle angeordnet sind.

In Fig. 4 ist anhand einer Explosionsdarstellung der Aufbau der erfindungsgemäßen Antriebseinheit 10 dargestellt. Die Antriebseinheit 10 weist eine Aufnahmeeinheit 16 auf, die sich aus einem Aufnahmeflansch 46, einer Gehäusewandung 48 mit Kühlrippen 50 und einem Motorteildeckel 20 zusammensetzt. Die Aufnahmeeinheit 16 weist eine Maximalanzahl von Aufnahmebereichen auf, von denen einer exemplarisch mit dem Bezugszeichen 26 gekennzeichnet ist. Der Aufnahmebereich 26 setzt sich aus einer in dem Aufnahmeflansch 46 befindlichen kreisförmigen Öffnung 52 und einer in die Gehäusewandung 48 eingearbeiteten Aussparung 54 zusammen. Jeder der Aufnahmebereiche 26 ist dazu ausgebildet, eine der elektrischen Maschinen 18 aufzunehmen.

Gemäß der Darstellung in Fig. 4 sollen in die Aufnahmeeinheit 16 drei baulich eigenständig ausgebildete elektrische Maschinen 18 eingebracht werden bzw. dann eingebracht sein. Diese elektrischen Maschinen 18 sollen dabei baugleich ausgeführt sein, es soll sich quasi, was den Aufbau bzw. die Realisierung der elektrischen Antriebseinheit 10 angeht, um eine elektrische Standardmaschine handeln. Die elektrischen Maschinen 18 sind an dem Aufnahmeflansch 46 befestigt und somit mit der Aufnahmeeinheit 16 verbunden. Zu diesem Zweck sind bei den elektrischen Maschinen 18 Befestigungsbohrungen vorgesehen, von denen eine exemplarisch mit dem Bezugszeichen 56 gekennzeichnet ist. Durch die Befestigungsbohrungen 56 können beispielsweise, in Figur 4 aus Gründen der Übersichtlichkeit nicht dargestellte Schrauben eingeführt werden, die zum Zweck der Befestigung der elektrischen Maschine 18 in zugehörige, im Aufnahmeflansch 46 befindliche Gewinde eingreifen.

Jede der elektrischen Maschinen 18 weist eine Maschinenabtriebswelle zum Bereitstellen eines Maschinendrehmoments auf, wobei eine dieser Maschinenabtriebswellen exemplarisch mit dem Bezugszeichen 30 gekennzeichnet ist. Wie bereits im Zusammenhang mit Fig. 3 ausgeführt, weist die Maschinenabtriebswelle 30 einen Zahnradbereich 32 und einen weiteren Zahnradbereich 38 auf. Am Motorteildeckel 20 sind die Maschinenabtriebswellen 30 über Rollenlager gelagert, von denen eines exemplarisch mit dem Bezugszeichen 58 gekennzeichnet ist. Zwischen dem jeweiligen Rollenlager 58 und dem Motorteildeckel 20 sind Dichtungsringe angeordnet, um den getriebeseitigen Teil 14 gegenüber der Umgebung abzudichten. Einer dieser Dichtungsringe ist exemplarisch mit dem Bezugszeichen 60 gekennzeichnet. Auch am Getriebeteildeckel 22 sind die Maschinenabtriebswellen 30 über Rollenlager gelagert, von denen eines exemplarisch mit dem Bezugszeichen 62 gekennzeichnet ist. Auch bei diesen Rollenlagern 62 ist es so, dass zwischen dem jeweiligen Rollenlager 62 und dem Getriebeteildeckel 22 Dichtungsringe angeordnet sind, um auch an dieser Stelle den getriebeseitigen Teil 14 gegenüber der Umgebung abzudichten. Aufgrund der gewählten Darstellung sind diese am getriebeseitigen Teil 14 angeordneten Dichtungsringe jedoch nicht zu sehen.

Die Hauptwelle 24 ist ebenfalls über Rollenlager gelagert, und zwar über ein dem maschinenseitigen Teil 12 zugeordnetes Rollenlager 64 und über ein dem getriebeseitigen Teil 14 zugeordnetes Rollenlager 66. Zwischen dem Rollenlager 64 und dem Motorteildeckel 20 ist ein aufgrund der gewählten Perspektive nicht einsehbarer Dichtungsring angeordnet. Zwischen dem Rollenlager 66 und dem Getriebeteildeckel 22 ist ein Dichtungsring 68 angeordnet. Der getriebeseitige Teil 14 ist somit vollständig gegenüber der Umgebung 70 abgedichtet. Dies ermöglicht beispielsweise, den getriebeseitigen Teil 14 mittels Öl zu kühlen. Der maschinenseitige Teil 12, wird dagegen, wie bereits oben ausgeführt, vorzugsweise mittels Luft gekühlt.

Die Zahnradbereiche 32 wirken jeweils mit einem Koppelelement 34 zusammen, das als Zahnrad ausgebildet ist, und das aufgrund der geometrischen Gegebenheiten als Sonnenrad bezeichnet werden kann. Das Koppelelement 34 steht über eine Freilaufvorrichtung 42 mit der Hauptwelle 24 in Wirkverbindung. Die weiteren Zahnradbereiche 38 wirken jeweils mit einem weiteren Zahnrad 40 zusammen, das mittels eines Rollenlagers 72 auf der Hauptwelle 24 gelagert ist. Ferner steht das weitere Zahnrad 40 über eine Kupplungsvorrichtung 44 mit der Hauptwelle 24 in Wirkverbindung, die dazu ausgebildet ist, einen Kraftschluss zwischen dem weiteren Zahnrad 40 und der Hauptwelle 24 zu ermöglichen.

An dieser Stelle sei noch erwähnt, dass es keine einschränkende Wirkung haben soll, wenn in Fig. 4 ausschließlich Rollenlager dargestellt sind. Es können auch anders ausgebildete Lager zum Einsatz kommen, beispielsweile Kugellager.

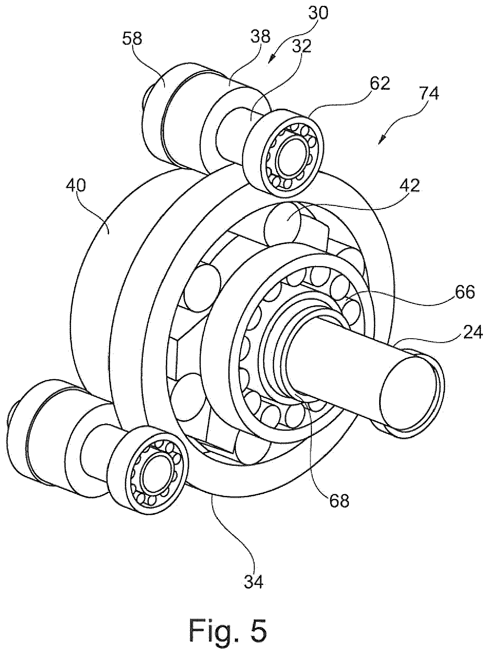

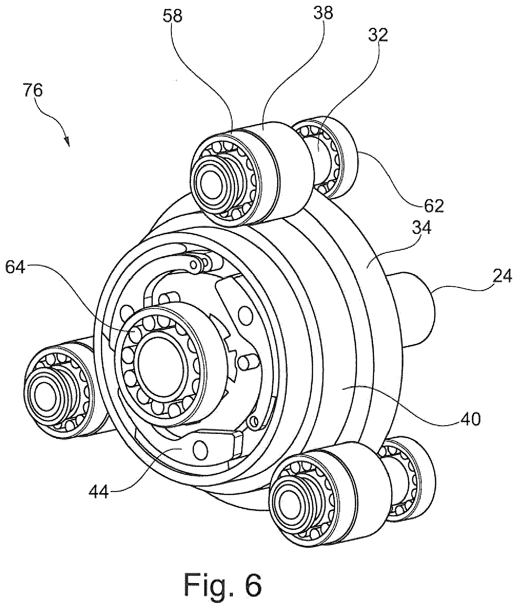

In Fig. 5 ist derjenige Teil des in der erfindungsgemäßen Antriebseinheit enthaltenen Getriebes dargestellt, der eine erste Getriebestufe 74 bildet, und in Fig. 6 ist derjenige Teil des in der erfindungsgemäßen Antriebseinheit enthaltenen Getriebes dargestellt, der eine zweite Getriebestufe 76 bildet. Die erste Getriebestufe 74 wird dadurch ausgebildet, dass Zahnradbereiche 32 mit dem als Zahnrad ausgebildeten Koppelelement 34 zusammenwirken. Das Koppelelement 34 wirkt über eine Freilaufvorrichtung 42 mit der Hauptwelle 24 zusammen. Die zweite Getriebestufe 76 wird dadurch ausgebildet, dass weitere Zahnradbereiche 38 mit einem weiteren Zahnrad 40 zusammenwirken. Das weitere Zahnrad 40 steht über eine Kupplungsvorrichtung 44 mit der Hauptwelle 24 in Wirkverbindung. Demzufolge ist das hier beschriebene Getriebe zweistufig ausgeführt. Dies soll keine einschränkende Wirkung haben. Selbstverständlich kann das Getriebe auch derart ausgeführt sein, dass es mehr als zwei Stufen aufweist.

### Bezugszeichenliste

- 10: elektrische Antriebseinheit
- 12: maschinenseitiger Teil
- 14: getriebeseitiger Teil
- 16: Aufnahmeeinheit
- 18: elektrische Maschine
- 20: Motorteildeckel
- 22: Getriebeteildeckel
- 24: Hauptwelle
- 26: Aufnahmebereich
- 28: Ansteuervorrichtung
- 30: Maschinenabtriebswelle
- 32: Zahnradbereich
- 34: Koppelelement
- 36: zweistufiges Getriebe
- 38: weiterer Zahnradbereich
- 40: weiteres Zahnrad
- 42: Freilaufvorrichtung
- 44: Kupplungsvorrichtung
- 46: Aufnahmeflansch
- 48: Gehäusewandung
- 50: Kühlrippen
- 52: kreisförmige Öffnung
- 54: Aussparung
- 56: Befestigungsbohrung
- 58: Rollenlager
- 60: Dichtungsring
- 62: Rollenlager
- 64: Rollenlager
- 66: Rollenlager
- 68: Dichtungsring
- 70: Umgebung
- 72: Rollenlager
- 74: erste Getriebestufe
- 76: zweite Getriebestufe

## Patentansprüche

1. Elektrische Antriebseinheit für ein Fahrzeug, mit
einer Aufnahmeeinheit (16), wobei die Aufnahmeeinheit (16) eine Maximalanzahl von Aufnahmebereichen (26) aufweist, von denen jeder dazu ausgebildet ist, eine elektrische Maschine (18) aufzunehmen,
einer Anzahl von elektrischer Maschinen (18), wobei jede dieser elektrischen Maschinen (18) eine Maschinenabtriebswelle (30) zum Bereitstellen eines Maschinendrehmoments aufweist, und wobei jede dieser elektrischen Maschinen (18) in einen ihr zugeordneten Aufnahmebereich (26) eingebracht ist und mit der Aufnahmeeinheit (16) verbunden ist,
einer gemeinsamen Hauptwelle (24), über die die Antriebseinheit (10) abtriebsseitig ein Antriebseinheitendrehmoment bereitstellen kann, und
einem Koppelelement (34), über das die Maschinenabtriebswellen (30) antriebsseitig mit der Hauptwelle (24) zum Einspeisen der Maschinendrehmomente wirkverbunden sind, **dadurch gekennzeichnet, dass** die eingebrachten elektrischen Maschinen (18) baulich eigenständig ausgebildet sind und jeweils über eine individuell zugeordnete Ansteuervorrichtung verfügen, sodass die Antriebseinheit (10) skalierbar ist, indem die Anzahl der eingebrachten elektrischen Maschinen (18) vorbestimmbar ist, und zwar in Abhängigkeit eines Vorgabewerts, der im Vorfeld für eine abtriebsseitige Kenngröße der aufzubauenden Antriebseinheit (10) vorgebbar ist, wobei die Anzahl der eingebrachten elektrischen Maschinen (18) zwischen 1 und der Maximalanzahl liegt.

2. Elektrische Antriebseinheit nach Anspruch 1, **dadurch gekennzeichnet, dass** die Aufnahmeeinheit (16) derart ausgebildet ist, dass die eingebrachten elektrischen Maschinen (18) derart angeordnet sind, dass die Maschinenabtriebswellen (30) parallel zueinander ausgerichtet sind.

3. Elektrische Antriebseinheit nach einem der vorstehenden Ansprüche, **dadurch gekennzeichnet, dass** die Aufnahmeeinheit (16) derart ausgebildet ist, dass die eingebrachten elektrischen Maschinen (18) derart angeordnet sind, dass die Maschinenabtriebswellen (30) symmetrisch in Bezug auf die Hauptwelle (24) angeordnet sind.

4. Elektrische Antriebseinheit nach einem der vorstehenden Ansprüche, **dadurch gekennzeichnet, dass** die Aufnahmeeinheit (16) derart ausgebildet ist, dass die eingebrachten elektrischen Maschinen (18) derart angeordnet sind, dass die Maschinenabtriebswellen (30) parallel zu der Hauptwelle (24) ausgerichtet sind.

5. Elektrische Antriebseinheit nach einem der vorstehenden Ansprüche, **dadurch gekennzeichnet, dass** es sich bei dem Koppelelement (34) um ein mit der Hauptwelle (24) in Wirkverbindung stehendes Zahnrad handelt.

6. Elektrische Antriebseinheit nach einem der vorstehenden Ansprüche, **dadurch gekennzeichnet, dass** das Koppelelement (34) über eine Freilaufvorrichtung (42) mit der Hauptwelle (24) in Wirkverbindung steht.

7. Elektrische Antriebseinheit nach einem der vorstehenden Ansprüche, **dadurch gekennzeichnet, dass** die Maschinenabtriebswellen (30) zumindest einen Zahnradbereich (32) aufweisen, über den sie jeweils mit dem als Zahnrad ausgebildeten Koppelelement (34) wirkverbunden sind.

8. Elektrische Antriebseinheit nach einem der vorstehenden Ansprüche, **dadurch gekennzeichnet, dass** die Hauptweile (24) Teil eines mehrstufig ausgeführten Getriebes (36) ist.

9. Elektrische Antriebseinheit nach Anspruch 8, **dadurch gekennzeichnet, dass** zum Ausbilden einer ersten Stufe (74) des Getriebes (36) die Zahnradbereiche (32) der Maschinenabtriebswellen (30) und das als Zahnrad ausgebildete Koppelelement (34) zusammenwirken.

10. Elektrische Antriebseinheit nach einem der Ansprüche 8 oder 9, **dadurch gekennzeichnet, dass** zum Ausbilden einer weiteren: Stufe (76) des Getriebes (36), die Maschinenabtriebswellen (30) jeweils einen weiteren Zahnradbereich (38) aufweisen, wobei die weiteren Zahnradbereiche (38) mit einem weiteren, mit der Hauptwelle (24) in Wirkverbindung stehenden Zahnrad (40) zusammenwirken.

11. Elektrische Antriebseinheit nach Anspruch 10, **dadurch gekennzeichnet, dass** das weitere Zahnrad (40) über eine Kupplungsvorrichtung (44) mit der Hauptwelle (24) in Wirkverbindung steht.

12. Elektrische Antriebseinheit nach Anspruch 11, **dadurch gekennzeichnet, dass** die Kupplungsvorrichtung (44) dazu ausgebildet, einen Kraftschluss zwischen dem weiteren Zahnrad (40) und der Hauptwelle (24) zu ermöglichen.

13. Elektrische Antriebseinheit nach einem der vorstehenden Ansprüche, **dadurch gekennzeichnet, dass** die Aufnahmeeinheit (16) Kühlrippen (50) aufweist.

14. Elektrische Antriebseinheit nach einem der vorstehenden Ansprüche, **dadurch gekennzeichnet, dass** es sich bei dem Fahrzeug um ein einspuriges Fahrzeug handelt.

## Claims

1. An electric drive unit for a vehicle, with
a receiving unit (16), wherein the receiving unit (16) has a maximum number of receiving regions (26), each of which is designed to receive an electric machine (18),
a number of electric machines (18), wherein each of these electric machines (18) has a machine output shaft (30) for providing a machine torque, and wherein each of these electric machines (18) is introduced into a receiving region (26) associated with it and is connected to the receiving unit (16),
a common main shaft (24), via which the drive unit (10) can provide a drive-unit torque on the output side, and
a coupling element (34), via which the machine output shafts (30) are in an operative connection on the drive side with the main shaft (24) for feeding in the machine torques, **characterised in that** the introduced electric machines (18) are designed to be structurally independent and in each case have an individually assigned actuating device, so that the drive unit (10) is scalable, **in that** the number of introduced electric machines (18) can be predetermined, namely dependent on a set value which can be preset in advance for an output-side characteristic quantity of the drive unit (10) which is to be constructed, wherein the number of introduced electric machines (18) lies between 1 and the maximum number.

2. An electric drive unit according to Claim 1, **characterised in that** the receiving unit (16) is designed such that the introduced electric machines (18) are arranged such that the machine output shafts (30) are oriented parallel to each other.

3. An electric drive unit according to one of the preceding claims, **characterised in that** the receiving unit (16) is designed such that the introduced electric machines (18) are arranged such that the machine output shafts (30) are arranged symmetrically in relation to the main shaft (24).

4. An electric drive unit according to one of the preceding claims, **characterised in that** the receiving unit (16) is designed such that the introduced electric machines (18) are oriented such that the machine output shafts (30) are arranged parallel to the main shaft (24).

5. An electric drive unit according to one of the preceding claims, **characterised in that** the coupling element (34) is a gear wheel which is in an operative connection with the main shaft (24).

6. An electric drive unit according to one of the preceding claims, **characterised in that** the coupling element (34) is in an operative connection with the main shaft (24) via a freewheel device (42).

7. An electric drive unit according to one of the preceding claims, **characterised in that** the machine output shafts (30) have at least one gear-wheel region (32), via which they are in each case in an operative connection with the coupling element (34) which is designed as a gear wheel.

8. An electric drive unit according to one of the preceding claims, **characterised in that** the main shaft (24) is part of a multi-stage transmission (36).

9. An electric drive unit according to Claim 8, **characterised in that** the gear-wheel regions (32) of the machine output shafts (30) and the coupling element (34) which is designed as a gear wheel cooperate to form a first stage (74) of the transmission (36).

10. An electric drive unit according to one of Claims 8 or 9, **characterised in that**, to form a further stage (76) of the transmission (36), the machine output shafts (30) in each case have a further gear-wheel region (38), the further gear-wheel regions (38) cooperating with a further gear wheel (40) which is in an operative connection with the main shaft (24).

11. An electric drive unit according to Claim 10, **characterised in that** the further gear wheel (40) is in an operative connection with the main shaft (24) by means of a coupling device (44).

12. An electric drive unit according to Claim 11, **characterised in that** the coupling device (44) is designed to make possible a non-positive connection between the further gear wheel (40) and the main shaft (24).

13. An electric drive unit according to one of the preceding claims, **characterised in that** the receiving unit (16) has cooling ribs (50).

14. An electric drive unit according to one of the preceding claims, **characterised in that** the vehicle is a single-track vehicle.

## Revendications

1. Unité d'entraînement électrique destinée à un véhicule comprenant :
une unité de réception (16), l'unité de réception (16) ayant un nombre maximum de zones de réception (26) dont chacune est réalisée pour recevoir une machine électrique (18),
un ensemble de machines électriques (18), chacune de ces machines électriques (18) ayant un arbre de sortie (30) permettant de fournir un couple de rotation et étant installée dans une zone de réception (26) qui lui est associée et étant reliée à l'unité d'entraînement (16),
un arbre principal commun (24) par l'intermédiaire duquel l'unité d'entraînement (10) peut fournir côté sortie un couple de rotation, et
un élément de couplage (34) par l'intermédiaire duquel les arbres de sortie (30) des machines sont reliés fonctionnellement côté sortie avec l'arbre principal (24) pour permettre de fournir les couples de rotation des machines,
**caractérisée en ce que**
les machines électriques (18) installées sont structurellement indépendantes et disposent chacune d'un dispositif de commande associé individuel, de sorte que l'unité d'entraînement (10) puisse être évolutive du fait que le nombre des machines électriques (18) installées peut être prédéterminé et ce, en fonction d'une valeur de consigne qui peut être déterminée préalablement pour une grandeur caractéristique côté sortie de l'unité d'entraînement (10) à monter, le nombre de machines électriques (18) installées étant compris entre 1 et le nombre maximum.

2. Unité d'entraînement électrique conforme à la revendication 1,
**caractérisée en ce que**
l'unité de réception (16) est réalisée de sorte que les machines électriques (18) installées soient montées pour que les arbres de sortie (30) de ces machines soient orientés parallèlement.

3. Unité d'entraînement électrique conforme à l'une des revendications précédentes,
**caractérisée en ce que**
l'unité de réception (16) est réalisée de sorte que les machines électriques (18) installées soient montées pour que les arbres de sortie (30) de ces machines soient symétriques par rapport à l'arbre principal (24).

4. Unité d'entraînement électrique conforme à l'une des revendications précédentes,
**caractérisée en ce que**
l'unité de réception (16) est réalisée de sorte que les machines électriques (18) installées soient montées pour que les arbres de sortie (30) de ces machines soient orientés parallèlement à l'arbre principal (24).

5. Unité d'entraînement électrique conforme à l'une des revendications précédentes,
**caractérisée en ce que**
l'élément de couplage (34) est constitué par une roue dentée en liaison fonctionnelle avec l'arbre principal (24).

6. Unité d'entraînement électrique conforme à l'une des revendications précédentes,
**caractérisée en ce que**
l'élément de couplage (34) est en liaison fonctionnelle avec l'arbre principal (24) par l'intermédiaire d'un dispositif à roue libre (42).

7. Unité d'entraînement électrique conforme à l'une des revendications précédentes,
**caractérisée en ce que**
les arbres de sortie (30) des machines comportent au moins une zone de roue dentée (32) par l'intermédiaire de laquelle ils sont fonctionnellement reliés, chacun, à l'élément de couplage (34) réalisé en tant que roue dentée.

8. Unité d'entraînement électrique conforme à l'une des revendications précédentes,
**caractérisée en ce que**
l'arbre principal (24) est une partie d'une transmission (36) à plusieurs étages.

9. Unité d'entraînement électrique conforme à la revendications 6,
**caractérisée en ce que**
pour permettre de former un premier étage (74) de la transmission (36) les zones de roue dentée (32) des arbres de sortie (30) des machines et l'élément de couplage (34) réalisé sous la forme d'une roue dentée coopèrent.

10. Unité d'entraînement électrique conforme à l'une des revendications 8 ou 9,
**caractérisée en ce que**
pour permettre de former un autre étage (76) de la transmission (36) les arbres de sortie (30) des machines comportent chacun une autre zone de roue dentée (38), les autres zones de roue dentée (38) coopérant avec une autre roue dentée (40) en liaison fonctionnelle avec l'arbre principal (24).

11. Unité d'entraînement électrique conforme à la revendications 10,
**caractérisée en ce que**
l'autre roue dentée (40) est en liaison fonctionnelle avec l'arbre principal (24) par l'intermédiaire d'un dispositif de couplage (44).

12. Unité d'entraînement électrique conforme à la revendications 11,
**caractérisée en ce que**
le dispositif de couplage (44) est réalisé pour permettre une liaison par la force entre l'autre roue dentée (40) et l'arbre principal (24).

13. Unité d'entraînement électrique conforme à l'une des revendications précédentes,
**caractérisée en ce que**
l'unité de réception (16) comporte des ailettes de refroidissement (50).

14. Unité d'entraînement électrique conforme à l'une des revendications précédentes,
**caractérisée en ce que**
le véhicule est un véhicule à une seule ligne de roue.
